(19) Europäisches Patentamt

European Patent Office

Office européen des brevets

(11) **EP 0 445 555 B1**

(12) **EUROPÄISCHE PATENTSCHRIFT**

(45) Veröffentlichungstag und Bekanntmachung des Hinweises auf die Patenterteilung:
**23.07.1997 Patentblatt 1997/30**

(51) Int Cl.⁶: **F01L 1/34**, F02D 41/26

(21) Anmeldenummer: **91102084.0**

(22) Anmeldetag: **14.02.1991**

(54) **Regelverfahren zur drehzahlabhängigen, stufenlosen Verstellung der Nockenspreizung**

Method for the regulation of the camshaft phasing, continuously variable according to RPM

Procédé de régulation continue de phase d'arbre à cames en fonction du régime

(84) Benannte Vertragsstaaten:
**DE ES FR GB IT SE**

(30) Priorität: **06.03.1990 DE 4006950**

(43) Veröffentlichungstag der Anmeldung:
**11.09.1991 Patentblatt 1991/37**

(73) Patentinhaber: **Bayerische Motoren Werke Aktiengesellschaft 80788 München (DE)**

(72) Erfinder:
• **Jurascheck, Stefan W-8000 München 80 (DE)**
• **Oehling, Karl-Heinz W-8000 München 40 (DE)**

• **Rahnavardi, Parviz W-8000 München 50 (DE)**

(74) Vertreter: **Dirscherl, Josef c/o Bayerische Motoren Werke Aktiengesellschaft Patentabteilung AJ-34 80788 München (DE)**

(56) Entgegenhaltungen:
**EP-A- 0 224 152        DE-A- 3 716 947**
**US-A- 4 909 194**

• **PATENT ABSTRACTS OF JAPAN vol. 10, no. 51 (M-457) 28. Februar 1986 & JP-A-60 201 019 (HITACHI SEISAKUSHO KK) 11. Oktober 1985**

**Beschreibung**

Die Erfindung bezieht sich auf ein Verfahren zur drehzahlabhängigen Regelung der stufenlosen Verstellung der Nockenspreizung einer Brennkraftmaschine gemäß dem Oberbegriff des Anspruchs 1.

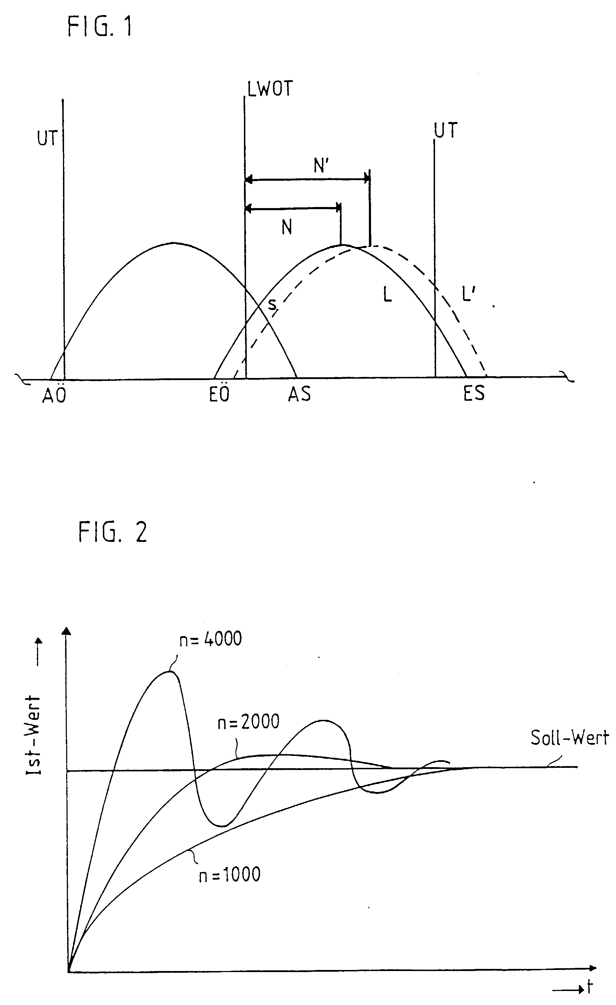

Bei festen Steuerzeiten der Ventile einer Brennkraftmaschine ist diese für einen bestimmten Betriebspunkt ausgelegt. Um bei höheren Drehzahlen eine bessere Zylinderfüllung durch einen späteren Einlaßschluß und bei niedrigeren Drehzahlen einen besseren Luftaufwand durch einen frühen Einlaßschluß zu erreichen, ist man dazu übergegangen, die Steuerzeiten zu verschieben. Ein Maß für die Verschiebung ist die sogenannte Nockenspreizung, die, wie anhand der Figur 1 gezeigt ist, die Zeitspanne zwischen Oberem Totpunkt beim Ladungswechsel (LWOT) und dem größten Ventilhub des Einlaßventils ist.

In Figur 1 ist der Ventilhub über der Zeit aufgetragen. Der Ventilhub des Auslaßventils beginnt bei AÖ (Auslaßöffnung) und endet bei AS (Auslaßschluß). Der Ventilhub des Einlaßventils beginnt bei EÖ (Einlaßöffnung) und endet bei ES (Einlaßschluß). Während der Zeitspanne EÖ bis AS überschneiden sich die Hubbewegungen des Einlaß- und Auslaßventils. Im Bereich des Schnittpunktes S liegt der Obere Totpunkt beim Ladungswechsel. Die ausgezogene Linie L stellt den Hub des Einlaßventils ohne eine Verschiebung der Steuerzeiten dar. Die Nockenspreizung, die durch den Doppelpfeil N gekennzeichnet ist, ist die normale Serienspreizung.

Nach einem Verdrehen der Nockenwelle relativ zu der Kurbelwelle nimmt der Hub des Einlaßventils den Verlauf der gestrichelt dargestellten Linie L' ein. Damit verändert sich der Überschneidungsbereich der beiden Ventilhübe des Auslaßventils und des Einlaßventils, wofür die geänderte Nockenspreizung, die durch den Doppelpfeil N' symbolisiert ist, ein Maß ist.

Bekannte Ausführungsformen der Regelung der Nockenspreizung erlauben eine Verstellung der Nockenwelle zwischen zwei Spreizungen. Eine große Spreizung im Leerlauf und bei hohen Motordrehzahlen bringt eine bessere Leerlaufqualität bzw. ein höheres Drehmoment und eine höhere Leistung mit sich. Aus einer kleineren Nockenspreizung resultieren im mittleren Drehzahlbereich Vorteile bezüglich des Drehmoments, des Kraftstoffverbrauchs und der Abgasemission.

Um die Vorteile der variablen Nockenspreizung voll zu nutzen, ist es ebenfalls bekannt, die Verstellung der Nockenwelle stufenlos vorzunehmen. Dies geschieht beispielsweise mittels zweier miteinander in Eingriff stehender Schrägverzahnungen, von denen eine mit der Nockenwelle verbunden ist und die andere über eine Kette von der Kurbelwelle angetrieben wird. Dieses sogenannte Vanos-Prinzip (variable Nockenspreizung) ermöglicht so je nach Last und Motordrehzahl eine individuelle Einstellung der Nockenspreizung und damit eine optimale Ausnutzung der Vorteile der variablen Nockenspreizung.

Nach dem bisher eingesetzten Regelkonzept wird die aktuelle Lage der Nockenwelle mittels eines induktiven Wegaufnehmers erfaßt und als Ist-Wert einem analogen Regelglied zurückgemeldet. Die für den aktuellen Betriebspunkt optimale Spreizung wird von einem Rechner errechnet und als Soll-Wert dem Regelglied mitgeteilt.

Bei diesem Regelsystem wird eine direkte Messung der tatsächlich eingestellten Spreizung vorgenommen, um Störungen, z.B. aufgrund von Toleranzen, einer Temperaturdrift oder einer Änderung des Betriebszustands wegen Verschleißes und Verschmutzung, zu vermeiden.

Bei dem bekannten Regelkonzept hat es sich als nachteilig herausgestellt, daß die Motordrehzahl einen unerwünschten Einfluß auf das Reglerverhalten hat. Wie aus Figur 2 ersichtlich, ist die Drehzahl n in einem Zeit-Istwert-Diagramm dargestellt. Bei unterschiedlichen Drehzahlen (n = 1000, n = 2000, n = 4000) ändert sich das zeitliche Verhalten erheblich. Man erkennt in Fig. 2, daß bei hohen Drehzahlen (n = 4000) ein Überschwingen mit nachfolgendem oszillatorischen Einschwingen auftritt und bei kleinen Drehzahlen (n = 1000) ein langsamer Prozeß der Angleichung an den Soll-Wert stattfindet. Ein gewünschtes Einschwinghalten wird bei mittleren Drehzahlen (n = 2000) erreicht.

Aus der EP 0 224 152 A1 ist ein Verfahren der eingangs genannten Art bekannt. Es wird darin ein Arbeitsverfahren zur Steuerung mechanisch-hydraulisch betätigter Ventile beschrieben, wobei der Betrieb durch ein Verfahren ergänzt wird, bei dem eine die mechanisch-hydraulische Betätigung bewirkende Nockenwelle in ihrer relativen Drehlage zu einer Kurbelwelle winkelverstellbar ist.

Der Erfindung liegt die Aufgabe zugrunde, ein Regelverfahren der eingangs genannten Art derart weiterzuentwickeln, daß das Einschwingverhalten des Regelgliedes über den auftretenden Drehzahlbereich hinweg ähnlich ist, d. h. daß die Regelgüte im wesentlichen konstant ist.

Diese Aufgabe wird bei einem Verfahren der eingangs genannten Art durch die Merkmale des kennzeichnenden Teils gelöst.

Demgemäß wird erreicht, daß über den gesamten Drehzahlbereich hinweg schnell ausgeregelt wird. Dadurch wird nicht unnütz Stellenergie verbraucht und das mechanische System der Regelstrecke, z. B. eine Hydraulik, arbeitet nicht von Anschlag zu Anschlag, was den Verschleiß reduziert.

Die Erfindung wird anhand eines Ausführungsbeispiels und mit Bezug auf die beiliegenden Zeichnungen beschrieben. Es zeigen

Fig. 1 einen Verlauf des Ventilhubs zur Erläuterung der Nockenspreizung,

Fig. 2 das Einschwingverhalten bei einem bekannten Regelverfahren für mehrere Drehzahlen,

Fig. 3 eine schematische Übersicht über das erfindungsgemäße Regelsystem,

Fig. 4 Diagramme zur Ableitung des Ist-Wertes der Nockenspreizung und zur Ermittlung der drehzahlabhängigen Tastzeiten, und

Fig. 5 ein Blockschaltbild mit Darstellung der erfindungsgemäßen Systemkomponenten.

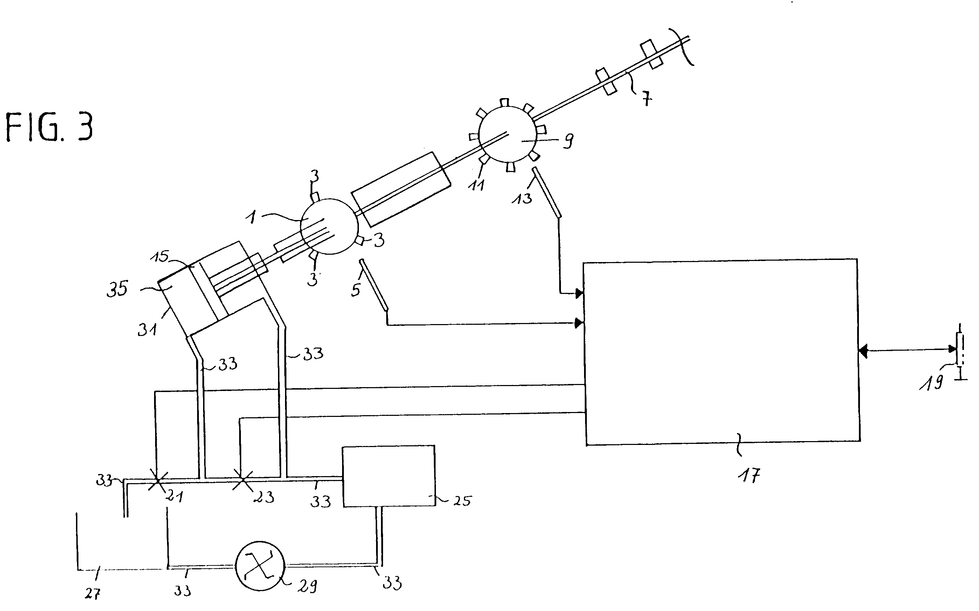

In Fig. 3 ist ein erstes Rad 1 zu erkennen, das an seinem Umfang mit drei Markierungen 3 versehen ist. Die Markierungen 3 sind äquidistant, d. h. in einem Winkel von 120 ° angeordnet. In einem Randbereich des Rades 1 ist ein erster Sensor 5 angeordnet, der beim Passieren einer der Markierungen 3 einen Kurbelwellenimpuls abgibt.

Ein zweites Markierungsrad 9 ist an seinem Umfang mit Markierungen 11 versehen. Wie allgemein bekannt, richtet sich die Anzahl der Markierungen 11 in der Regel nach derjenigen der Markierungen 3 und beträgt für Viertaktmotoren das Doppelte.

Die Anzahl der Markierungen 3 und 11 kann auch gleich sein, wenn der erste Sensor an der Kurbelwelle jedes zweite Sensorsignal unterdrückt. Oder aber es ist zumindest eines der Räder mit einem Zahnkranz von 60 Zähnen und einer Zahnlücke versehen und die Markierungen zur Bestimmung des Ist-Werts der Spreizung werden synthetisch durch Abzählen der passierten Zähne von der Zahnlücke aus gebildet. Analog zum ersten Rad 1 ist im Referenzpunkt ein zweiter Sensor 13 angeordnet, der bei Passieren einer der Markierungen 11 einen Nockenwellenimpuls abgibt.

Ein hydraulisch bewegter Kolben 15 kann sich axial zu der Nockenwelle 7 verschieben, was mittels der Schrägverzahnung einer Verstelleinrichtung ein Verdrehen der Nockenwelle 7 zur Folge hat. Dieses Verdrehen der Nockenwelle 7 verändert, wie einleitend ausgeführt, die Spreizung zwischen Kurbel- und Nockenwelle 7.

Die vom ersten und zweiten Sensor 5,13 abgenommenen Impulse werden zusammen mit einer Sollwertvorgabe, z.B. mittels eines Potentiometers 19, einer Regel- und Steuereinheit 17 zugeführt. Dort wird ein Stellsignal gebildet, das eines der beiden Ventile 21,23 betätigt. Die Ventile 21,23 sind Teil einer hydraulischen Anlage, bestehend aus einem Druckspeicher 25, einem Vorratsbehälter 27, einer Pumpe 29, einem Kolbengehäuse 31, in welchem der Kolben 15 läuft, und einer Anzahl von Verbindungsleitungen 33. Wenn das erste Ventil 21 geöffnet wird, wird der Raum 35 hinter dem Kolben 15 drucklos und der Kolben wird nach links geführt. Ist hingegen das erste Ventil 21 geschlossen, und das zweite Ventil 23 geöffnet, so werden der Raum 35 hinter dem Kolben 15 und der Raum vor dem Kolben 15 mit Druck beaufschlagt. Aufgrund der unterschiedlich großen Arbeitsflächen des Kolbens 15 wird auf den Kolben 15 von hinten mehr Kraft ausgeübt als von vorne, sodaß er sich nach rechts bewegt. Auf diese Weise kann die Nockenspreizung stufenlos in beiden Richtungen verändert werden.

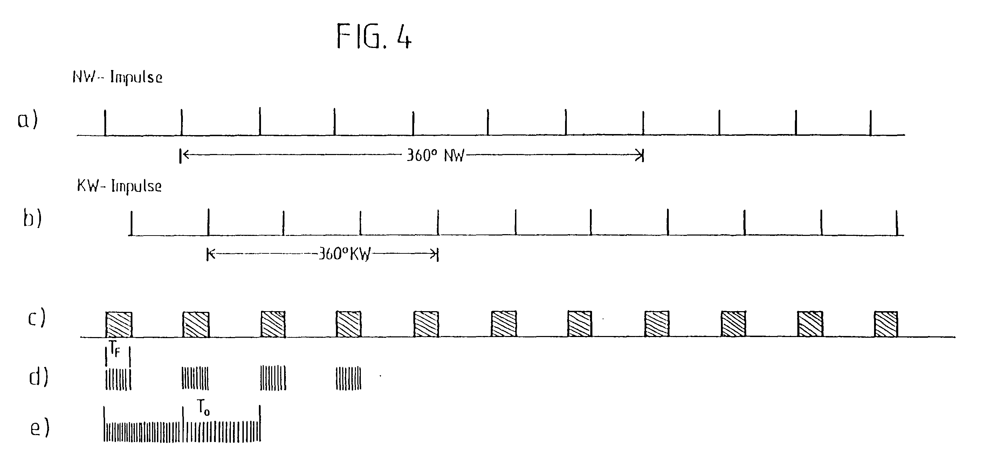

In Figur 4 sind in dem oberen mit a) bezeichneten Diagramm die vom zweiten Sensor 13 erzeugten Nockenwellenimpulse über dem Umdrehungswinkel der Nockenwelle 7 aufgetragen. Entsprechend den sechs Markierungen 11 ergeben sich sechs Impulse pro Umdrehung.

Im darunter liegenden Diagramm b) sind die vom ersten Sensor 5 detektierten Kurbelwellenimpulse über dem Umdrehungswinkel der Kurbelwelle aufgetragen. Es ist ersichtlich, daß dadurch, daß sich die Kurbelwelle doppelt so schnell dreht wie die Nockenwelle 7 und daß auf der Kurbelwelle nur halb so viel Markierungen 3 angebracht sind wie auf der Nockenwelle 7, die Kurbelwellenimpulse und die Nockenwellenimpulse jeweils den gleichen Abstand voneinander haben.

In der Regel- und Steuereinheit 17 wird mit jedem Nockenwellenimpuls des zweiten Sensors 13 ein Timer gestartet, der bei Detektion eines Kurbelwellenimpulses wieder gestoppt wird. Es ergibt sich so eine Rechteckfunktion, die im Diagramm c) dargestellt ist. Die Breite der Rechtecke wird im folgenden Torzeit $T_F$ oder Fenster genannt und die Periodendauer der Rechteckfunktion wird mit Abtastzeit $T_0$ bezeichnet. Die Werte der Torzeit $T_F$ und der Abtastzeit $T_0$ variieren mit der Drehzahl des Motors. Sie werden von einem Zählglied mit hoher Abtastfrequenz ermittelt, was aus den Diagrammen d) und e) ersichtlich ist. Die Abtastzeit $T_0$ kann zur Berechnung der Motordrehzahl herangezogen werden. Die Torzeit $T_F$ ist ein Maß für den Ist-Wert der Nockenspreizung, deren Winkelbetrag sich aus der Beziehung:

$$\frac{\text{Torzeit } T_F}{\text{Abtastzeit } T_0} = \frac{\text{Spreizung in Grad}}{120°}$$

ergibt.

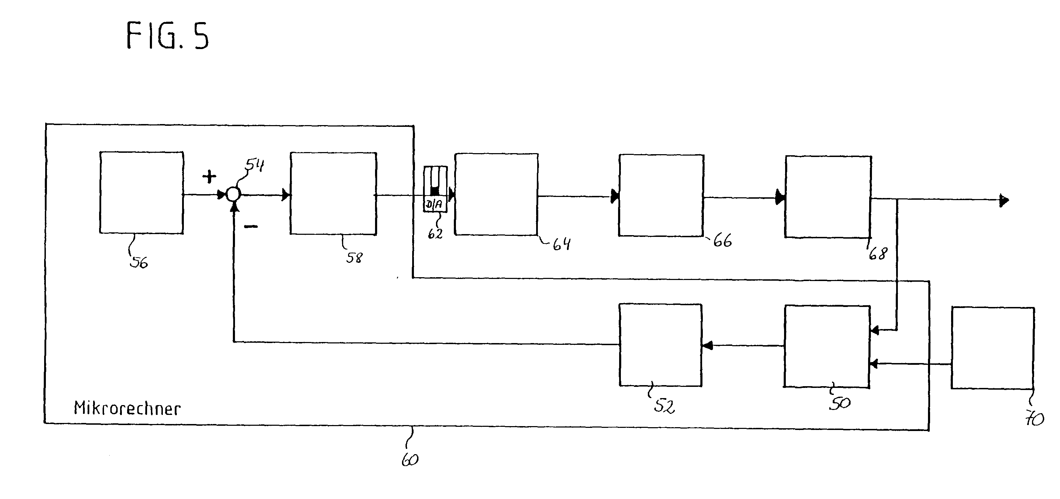

In Figur 5 sind die Systemkomponenten in einem Blockschaltbild dargestellt. Mit den abgenommenen Kurbelwellen- und Nockenwellenimpulsen wird im Block 50 die Messung der Torzeit $T_F$ und der Abtastzeit $T_0$ durchgeführt. Mit

den ermittelten Werten wird in Block 52 die Nockenspreizung berechnet, die in digitaler Form dem ersten Eingang (-) eines Differenbildners 54 zugeführt wird. An den zweiten Eingang (+) des Differenzbildners 54 wird der Soll-Wert für die Nockenspreizung gelegt. Der Soll-Wert ist in einem Spreizungs-Kennfeld, das mit Block 56 bezeichnet ist, gespeichert. Das Spreizungs-Kennfeld 56 wird unter Berücksichtigung eines oder mehrerer der folgenden Parameter gebildet:

Motordrehzahl n
Luftaufwand (Zylinderfüllung) $t_L$
Drosselklappenstellung $\alpha_{DK}$
Saugrohrdruck $p_S$
Fahrpedalstellung FP
Kühlwassertemperatur $\theta_w$
Ansauglufttemperatur $\theta_a$

Das Ausgangssignal des Differenzbildners 54 wird zur Soll-Wert-Übernahme in ein digitales Regelglied 58 mit der Abtastzeit $T_0$ getaktet eingelesen. Auf die Funktion des Regelglieds 58 wird später noch näher eingegangen.

Die Funktion der soweit beschriebenen Blöcke 50 bis 58 ist softwaremäßig durch einen Mikrorechner 60 realisiert. Das Ausgangssignal des digitalen Regelglieds 58 wird in einen D/A-Wandler 62 eingespeist, an dessen Ausgang das analoge Stellsignal zur Verfügung steht. Durch das Stellsignal wird die Steuerung der Ventile 21,23 gelenkt (Block 64). Eine Änderung der Ventilstellung hat, wie bereits bei der Beschreibung der Figur 3 ausgeführt, die Nockenwellenverstellung (Block 66) über den Kolben 15 zur Folge. Es ändert sich die Spreizung, wodurch die Nockenwellenimpulse eine andere Phasenbeziehung zu den Kurbelwellenimpulsen bekommen.

Die Bildung der Impulse mittels der Sensoren 5,13 und der Markierungen 3,11 ist durch die Blöcke 68 und 70 dargestellt.

Das digitale Regelglied 58 weist vorzugsweise eine PID-Charakteristik auf und erstellt innerhalb jeden Abtastschritts (Abtastzeit $T_0$) ein Ausgangssignal y(z), das nach folgendem Algorithmus gebildet wird:

$$y(z)_k = y(z)_{k-1} + q_0 \times u(z)_k + q_1 \times u(z)_{k-1} + q_2 \times u(z)_{k-2} \tag{1}$$

Darin bedeuten y(z) das Ausgangssignal und u(z) das Eingangssignal, also Soll-Wert minus Ist-Wert. Der Buchstabe z steht für die Betrachtung im Zeitbereich und der Index k ist der laufende Index der Messung. k ist die laufende, k-1 die vorhergehende und k-2 die vorvorhergehende Messung. Die Faktoren $q_0$, $q_1$ und $q_2$ sind die Regelparameter, die sich nach folgenden Formeln berechnen:

$$q_0 = K \left(1 + \frac{T_0}{2T_I} + \frac{T_D}{T_0}\right) \tag{2}$$

$$q_1 = K \left(1 - \frac{T_0}{2T_I} + 2\frac{T_D}{T_0}\right) \tag{3}$$

$$q_2 = K \left(\frac{T_D}{T_0}\right) \tag{4}$$

Darin bedeuten K der Proportionalanteil, $T_I$ der Integralanteil und $T_D$ der Differentialanteil.

Aus der Formel (1) ist ersichtlich, daß, je schneller die Abtastschritte aufeinander folgen, also je kleiner die Abtastzeit $T_0$ mit steigender Drehzahl wird, das alte Ausgangssignal $y(z)_{k-1}$ umso häufiger in einer betrachteten Zeiteinheit, die deutlich größer als die Abtastzeit $T_0$ ist, zu dem neuen Ausgangssignal $y(z)_k$ addiert wird. Dies führt zu einem unerwünschten Ansteigen der Stellgröße $y(z)_k$ und zu einer Instabilität des Regelglieds 58.

Dieser negative Effekt wird erfindungsgemäß dadurch kompensiert, daß die Regelparameter $q_0$, $q_1$ und $q_2$ drehzahlabhängig adaptiert werden. Dies kann beispielsweise so realisiert werden, daß die Regelparameter entsprechend den Formeln (2), (3) und (4) für alle infrage kommenden Abtastzeiten $T_0$ (und damit Drehzahlen) unter Berücksichtigung von Stabilitätsbedingungen vorabberechnet und in einem Kennfeld abgelegt werden. Bei Vorliegen der entsprechenden Abtastzeit $T_0$ werden sie dann zur Bildung der Stellgröße herangezogen. Eine Alternative hierzu sieht vor, die Berechnung der Regelparameter on-line durchzuführen, wobei die Gefahr von Rundungs- und Überlauffehlern inkaufgenommen wird.

**Patentansprüche**

1. Verfahren zur drehzahlabhängigen Regelung der stufenlosen Verstellung der Nockenspreizung einer Brennkraftmaschine, bei dem der Ist-Wert der Nockenspreizung über einen, vorzugsweise direkten, Vergleich der Kurbelwellenlage mit der Nockenwellenlage abgeleitet wird, wobei der Vergleich in drehzahlabhängigen Abtastzeiten erfolgt, und in digitaler Form dem ersten Eingang eines Differenzbildners zugeführt wird, der Soll-Wert der Nockenspreizung aus einem Spreizungs-Kennfeld als digitales Signal ausgelesen und dem zweiten Eingang des Differenzbildners zugeführt wird, gekennzeichnet durch folgende Schritte:

   - das Ausgangssignal des Differenzbildners wird einem digitalen Regelglied zugeführt, dessen Regelparameter drehzahlabhängig adaptiert werden und

   - das Ausgangssignal des Regelgliedes wird über einen D/A-Wandler in ein analoges Stellsignal umgeformt, das einer mechanischen Regelstrecke zur Einstellung des Soll-Werts der Spreizung zugeführt wird.

2. Verfahren nach Anspruch 1, dadurch gekennzeichnet, daß das Ausgangssignal des Differenzbildners mit der drehzahlabhängigen Abtastfrequenz abgetastet dem Regelglied zugeführt wird.

3. Verfahren nach Anspruch 1, dadurch gekennzeichnet, daß die drehzahlabhängige Adaption der Regelparameter mit Hilfe eines Kennfelds erfolgt, das durch eine Vorabberechnung der Regelparameter nach folgender Rechenvorschrift gebildet wird:

$$q_0 = K \left( 1 + \frac{T_0}{2T_I} + \frac{T_D}{T_0} \right) \qquad (2)$$

$$q_1 = K \left( 1 - \frac{T_0}{2T_I} + 2\frac{T_D}{T_0} \right) \qquad (3)$$

$$q_2 = K \left( \frac{T_D}{T_0} \right) \qquad (4)$$

wobei $q_0$, $q_1$ und $q_2$ die Regelparameter sind, K der Proportionalanteil ist, $T_I$ der Integralanteil ist, $T_D$ der Differentialanteil ist und $T_0$ die drehzahlabhängige Abtastzeit ist.

4. Verfahren nach Anspruch 1, dadurch gekennzeichnet, daß die drehzahlabhängige Adaption der Regelparameter on-line nach folgender Rechenvorschrift erfolgt:

$$q_0 = K \left( 1 + \frac{T_0}{2T_I} + \frac{T_D}{T_0} \right) \qquad (2)$$

$$q_1 = K \left( 1 - \frac{T_0}{2T_I} + 2\frac{T_D}{T_0} \right) \qquad (3)$$

$$q_2 = K \frac{T_D}{T_0} \right) \qquad (4)$$

wobei $q_0$, $q_1$ und $q_2$ die Regelparameter sind, K der Proportionalanteil ist, $T_I$ der Integralanteil ist, $T_D$ der Differentialanteil ist und $T_0$ die drehzahlabhängige Abtastzeit ist.

**5.** Verfahren nach einem der Ansprüche 1 bis 4, dadurch gekennzeichnet, daß das Regelglied zumindest ein Integral-Verhalten, vorzugsweise ein PID-Verhalten, aufweist.

**6.** Verfahren nach einem der Ansprüche 1 bis 5, dadurch gekennzeichnet, daß der Vergleich der Kurbelwellenlage mit der Nockenwellenlage über zwei Räder mit über dem Umfang äquidistant angeordneten Markierungen erfolgt, von denen je eines mit der Kurbelwelle bzw. mit der Nockenwelle mitläuft, wobei das Passieren der Markierungen an einem Referenzpunkt induktiv mittels eines Sensors erfaßt wird und die Zeitspanne zwischen zwei erfaßten, aufeinander folgenden Markierungen die Abtastzeit $T_0$ ist.

**7.** Verfahren nach Anspruch 6, dadurch gekennzeichnet, daß auf dem Rad der Kurbelwelle halb so viele Markierungen angeordnet sind wie auf dem Rad der Nockenwelle.

**8.** Verfahren nach Anspruch 6, dadurch gekennzeichnet, daß zumindest eines der Räder mit einem Zahnkranz von 60 Zähnen und einer Zahnlücke versehen ist und die Markierungen zur Bestimmung des Ist-Werts der Spreizung synthetisch durch Abzählen der passierten Zähne von der Zahnlücke aus gebildet werden.

**9.** Verfahren nach einem der Ansprüche 6 bis 8, dadurch gekennzeichnet, daß die Drehzahl der Nockenwelle mittels des mit ihr mitlaufenden Rades bestimmt wird.

**10.** Verfahren nach einem der Ansprüche 6 bis 9, dadurch gekennzeichnet, daß die Anzahl der Markierungen so gewählt ist, daß die Abtastzeiten über den gesamten Drehzahlbereich hin zwischen 1 ms und 50 ms liegen.

**Claims**

**1.** A method of speed-dependent control of stepless adjustment of the camshaft phasing of an internal combustion engine, wherein the actual value of the camshaft phasing is derived by comparison, preferably direct, between the position of the crankshaft and the position of the camshaft, and wherein the comparison is made at scanning times dependent on the engine speed and is supplied in digital form to the first input of a subtractor, and
the set value of the camshaft phasing is read in the form of a digital signal from characteristic data and is supplied to the second input of the subtractor,
characterised by the following steps:

- the output signal from the subtractor is supplied to a differential control element whose control parameters are adapted in dependence upon the engine speed, and
- the output signal from the control element is converted by a D/A converter into an analog adjusting signal which is supplied to a mechanical control section for adjusting the set value of the camshaft phasing.

**2.** A method according to claim 1, characterised in that the output signal from the subtractor is scanned at the speed-dependent scanning frequency when supplied to the control element.

**3.** A method according to claim 1, characterised in that the speed-dependent adaptation of the control parameters is by means of characteristic data obtained by advance calculation of the control parameters in accordance with the following rule:

$$q_o = K \left(1 + \frac{T_o}{2T_I} + \frac{T_D}{T_o}\right) \qquad (2)$$

$$q_1 = K \left(1 + \frac{T_o}{2T_I} + 2\frac{T_D}{T_o}\right) \qquad (3)$$

$$q_2 = K \left(\frac{T_D}{T_o}\right) \qquad (4)$$

where $q_o$, $q_1$ and $q_2$ are the control parameters, K is the proportionality constant, $T_1$ is the integral part, $T_D$ is the

differential part and $T_o$ is the speed-dependent scanning time.

**4.** A method according to claim 1, characterised in that the speed-dependent adaptation of the control parameters is made on line in accordance with the following rule:

$$q_o = K \, (1 + \frac{T_o}{2T_I} + \frac{T_D}{T_o}) \tag{2}$$

$$q_1 = K \, (1 - \frac{T_o}{2T_I} + 2\frac{T_D}{T_o}) \tag{3}$$

$$q_2 = K \, (\frac{T_D}{T_o}) \tag{4}$$

where $q_o$, $q_1$ and $q_2$ are the control parameters, K is the proportionality constant, $T_1$ is the integral part, $T_D$ is the differential part and $T_o$ is the speed-dependent scanning time.

**5.** A method according to any of claims 1 to 4, characterised fin that the working of the control element is at least integral, preferably PID.

**6.** A method according to any of claims 1 to 5, characterised in that the position of the crankshaft is compared with the position of the camshaft via two wheels with equidistant markings around their periphery, one wheel rotating with the crankshaft and one wheel rotating with the camshaft, wherein a sensor inductivity detects when the markings pass a reference point and the time between two detected successive markings is the scanning time $T_o$.

**7.** A method according to claim 6, characterised in that the crankshaft wheel has half as many markings as the camshaft wheel.

**8.** A method according to claim 6, characterised in that at least one wheel has a rim with 60 teeth and a gap, and the markings for determining the actual value of the phasing are obtained artificially by counting the teeth which pass after the gap.

**9.** A method according to any of claims 6 to 8, characterised in that the speed of the camshaft is determined by means of the wheel which rotates with it.

**10.** A method according to any of claims 6 to 9, characterised in that the number of markings is chosen so that the scanning times are between 1 ms and 50 ms over the entire engine speed range.

## Revendications

**1.** Procédé pour la régulation en continu du déphasage des cames d'un moteur à combustion interne en fonction de son régime, selon lequel la valeur réelle du déphasage des cames est enregistrée de préférence par comparaison directe de la position du vilebrequin avec celle de l'arbre à cames, la comparaison se faisant pendant des périodes de détection dépendant de la vitesse de rotation pour être appliquées à l'état numérique à la première entrée d'un générateur de différence,
la valeur de consigne du déphasage des cames étant extraite d'un champ de caractéristiques de déphasage sous la forme d'un signal numérique pour être appliquée à la seconde entrée du générateur de différence,
caractérisé par les étapes suivantes :

- le signal de sortie du générateur de différence est appliqué à un élément de régulation numérique dont les paramètres de régulation sont adaptés en fonction de la vitesse de rotation et
- le signal de sortie de l'élément de régulation est transformé en un signal de réglage analogique par un convertisseur numérique/analogique (convertisseur D/A), ce signal de réglage étant appliqué à un chemin de régulation mécanique pour régler la valeur de consigne du déphasage.

**2.** Procédé selon la revendication 1,
caractérisé en ce que
le signal de sortie du générateur de différence est détecté à une fréquence de détection dépendant de la vitesse de rotation pour être appliqué à l'élément de régulation.

**3.** Procédé selon la revendication 1,
caractérisé en ce que l'adaptation dépendant de la vitesse de rotation pour les paramètres de régulation se fait à l'aide d'un champ de caractéristiques formé par un calcul préalable des paramètres de régulation suivant la règle de calcul suivante :

$$q_0 = K\left(1 + \frac{T_0}{2T_I} + \frac{T_D}{T_0}\right) \qquad (2)$$

$$q_1 = K\left(1 - \frac{T_0}{2T_I} + 2\frac{T_D}{T_0}\right) \qquad (3)$$

$$q_2 = K\left(\frac{T_D}{T_0}\right) \qquad (4)$$

dans lesquels $q_0$, $q_1$, $q_2$ sont des paramètres de régulation, K représente la partie proportionnelle, $T_I$ la partie intégrale, $T_D$ la partie différentielle et $T_0$ la période de détection dépendant de la vitesse de rotation.

**4.** Procédé selon la revendication 1,
caractérisé en ce que
l'adaptation des paramètres de régulation en fonction de la vitesse de rotation se fait en ligne suivant les règles ci-après :

$$q_0 = K\left(1 + \frac{T_0}{2T_I} + \frac{T_D}{T_0}\right) \qquad . \qquad (2)$$

$$q_1 = K\left(1 - \frac{T_0}{2T_I} + 2\frac{T_D}{T_0}\right) \qquad (3)$$

$$q_2 = K\left(\frac{T_D}{T_0}\right) \qquad (4)$$

dans lesquelles $q_0$, $q_1$, $q_2$ sont les paramètres de régulation, K est la partie proportionnelle, $T_I$ la partie intégrale, $T_D$ la partie différentielle et $T_0$ la période de détection dépendant de la vitesse de rotation.

**5.** Procédé selon l'une des revendications 1 à 4,
caractérisé en ce que

l'élément de régulation présente au moins un comportement intégral de préférence un comportement PID (proportionnel, intégral, différentiel).

6. Procédé selon l'une des revendications 1 à 5,
caractérisé en ce que
la comparaison de la position du vilebrequin à celle de l'arbre à cames se fait par deux roues avec des marquages équidistants à leur périphérie et dont l'une tourne avec le vilebrequin et l'autre avec l'arbre à cames, le passage des repères en un point de référence étant détecté de manière inductive à l'aide d'un capteur et l'intervalle entre deux marquages successifs étant détecté comme temps de détection $T_0$.

7. Procédé selon la revendication 6,
caractérisé en ce que
la roue du vilebrequin comporte un nombre moitié de repères par rapport à la roue de l'arbre à cames.

8. Procédé selon la revendication 6,
caractérisé en ce qu'
au moins l'une des roues est munie d'une couronne dentée de 60 dents avec un intervalle de dent et les marquages pour définir la valeur réelle du déphasage étant formés par synthèse en décomptant les dents qui défilent par rapport à l'intervalle de temps.

9. Procédé selon l'une des revendications 6 à 8,
caractérisé en ce qu'
on définit la vitesse de rotation de l'arbre à cames à l'aide de la roue tournant avec cet arbre.

10. Procédé selon l'une des revendications 6 à 9,
caractérisé en ce qu'
on choisit le nombre des marquages pour que les périodes de détection sur toute la plage des vitesses de rotation (régime) sont entre 1 ms et 50 ms.

FIG. 1

FIG. 2

FIG. 3

EP 0 445 555 B1

# FIG. 4

NW-- Impulse

a)

|←————————————— 360° NW ——————————————→|

KW- Impulse

b)

|←——————— 360°KW ———————→|

c)

$T_F$

d)

$T_0$

e)

EP 0 445 555 B1

FIG. 5

Mikrorechner

13